# EUROPEAN PATENT APPLICATION

(11) **EP 2 743 208 A1**
(43) Date of publication of application: **18.06.2014**
(21) Application number: 12196938.0
(22) Date of filing: 13.12.2012
(51) Int. Cl.: B65D 88/74, G06Q 10/08

(54) **A system for tracking and tracing of containers**

(71) Applicant: Track4C NV, 7368 Aartselaar (BE)
(72) Inventor: van Herbruggen, Jan, 2650 Edegem (BE); van den Bulck, Gustaaf, 2630 Aartselaar (BE); Yaron, Opher, 1180 Ukkel (BE)
(74) Representative: Bird Goën & Co

(57) **Abstract**

A container (1) comprising a tracking device (13) with a battery (14); ventilation means (4) being provided in a wall (3) of the container (1). The tracking device (13) is installed within the ventilation means (4) and the battery (14) of the tracking device (13) is installed within the container (1) and connected to the tracking device (13).

## Description

### Technical field of the invention

The current invention relates to the tracking and tracing of containers.

### Background of the invention

Nowadays, containers are transported all over the world over air, land and sea. If a user needs to have goods transported from one source location to another destination location he can rent a container (or own one) and instruct a third transportation company to take care of the transportation. This company will make sure the container gets in the source location where the user can load his goods into the container. Typically this loading is done near a dock in a harbour. After loading, the container is transported to its destination location where the user can then unload his goods. The transportation from source to destination can be done by multiple ships whereby the container stays in a port in between or the container can be partly transported over land. The total transportation time is typically in the order of weeks. One major problem is that during this time, the user has no idea where his container and, more importantly, his goods are located, i.e. he has no visibility. Therefore, several companies offer solutions for tracking and tracing of containers. When using such a tracking solution, the user gets a tracking device that is typically installed on top or at the side of the container. In some cases the device is installed on the container doors acting also as a seal. This device is capable of sending location information wirelessly, for example by satellite communication, to a central system. An online user interface connected with this central system then provides the valuable location information to the user. At the destination location, when the user unloads his goods, he removes the tracking device from the container and returns it to the company that provided the tracking service.

A disadvantage of these tracking devices is their price. As they have to withstand severe weather and handling conditions when mounted on a container, the price of the components, especially the price of the battery, is high

Another disadvantage of these tracking devices is the need for "reverse logistics", i.e. the procedure to return the tracking device to the providing company. This procedure is complicated, it adds cost, and adds more risk of loss, damage or theft of the tracking device itself.

Yet another disadvantage of these tracking devices is their power consumption. In order for the tracking device to function for the complete duration of the transportation, big batteries need to be incorporated, resulting in a big and expensive tracking device.

### The invention

It is the object of the instant invention to obviate the two first disadvantages. To this end, the invention relates to a container comprising a tracking device with a battery; ventilation means being provided in a wall of the container; characterized by the fact that said tracking device is installed within the ventilation means; and said battery of said tracking device is installed within the container and connected to said tracking device.

Advantageously, the ventilation means may comprise holes and a protection cover. The holes can be provided in one of the walls of the container, for example one of the side wall, but also the top or bottom wall. On top of the holes, there is then a protection cover that prevents undesired elements, for example dust and moist, to enter the holes and thus the container. The cover has some openings to enable air flow into the container and thus enabling ventilation of the container. The tracking device can then be put under this cover and connected with the battery in the container through said holes.

Furthermore, the tracking device of the container according to the instant invention may comprise processing and transceiving (transmission and receiving) means arranged for the device to be a terminal of a cellular communication network such as for example a GSM, UMTS, CDMA or LTE network. This way, the tracking device can connect to a cellular base station and use the cellular communication network to send information to a central service.

Furthermore, the tracking device of the container of the present invention may also comprise processing and transceiving means for short range wireless communication such as for example Wireless LAN (IEEE 802.11), IEEE 802.15.4, Zigbee or Bluetooth.

Due to the fact that the battery of the tracking device is not within the ventilation device, but inside the container, it is no longer exposed to outside environmental conditions and can thus not be damaged anymore due to severe weather and handling conditions. Therefore, it is an advantage of the present invention that a common battery that is easy to find on the market can be used and, hence, it is cheaper than the solutions found in the prior art.

It is a further advantage that the battery can be larger as it is located inside the container and not bound by the outside dimensions of the protection cover. Therefore, it can allow for longer autonomous operation of the tracking device.

It is a further advantage that the tracking device is inside the ventilation means of the container. This way it is not considered separate from the container, and therefore does not need to be sent back separately. Therefore, reverse logistics can be avoided.

It is a further advantage of the instant invention that no expensive protection casing is needed because the tracking device is within the ventilation means. Consequently, the tracking device is cheaper than when it is placed outside of the container and the ventilation means.

It is a further advantage of the present invention that the power consumption is lower than when satellite communication is used because cellular communication and short range wireless communication is more power efficient. Consequently, the battery will be smaller and, hence, also cheaper.

The invention shall be better understood in light of the following description of various embodiments and of the accompanying drawings were
Figure 1 shows an illustrative example of a container comprising a ventilation means;
Figure 2 shows a cross section of a wall of a container comprising a tracking device within the ventilation means according to an embodiment of the instant invention;
Figure 3 shows components comprised in a tracking device according to an embodiment of the instant invention.

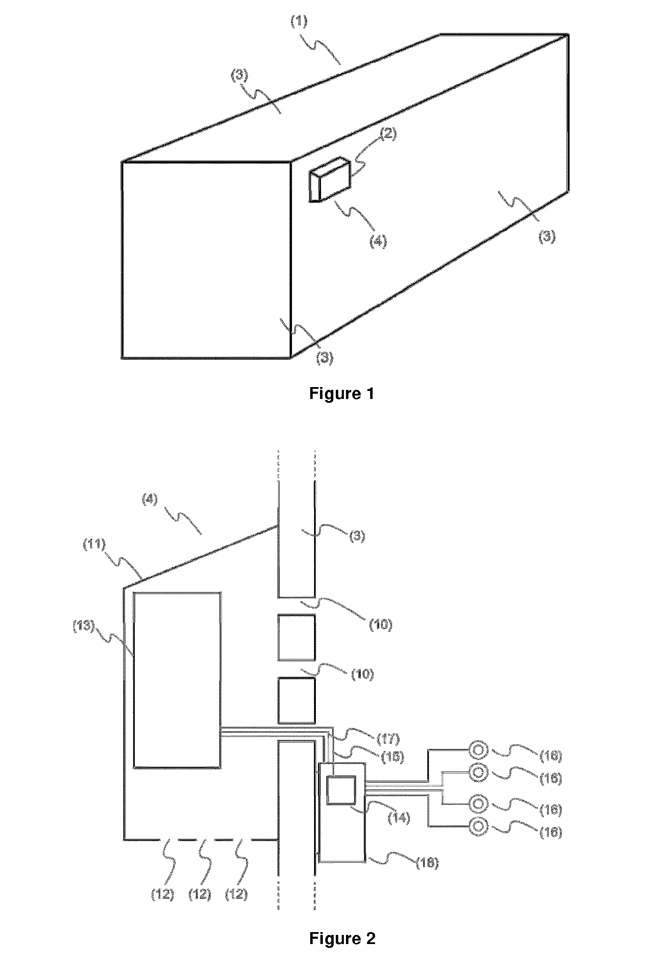

As illustrated in Figure 1 and Figure 2, a container (1) has a ventilation device (4) installed on or in one of its walls (3), on one of the side walls for example. In the wall there are holes (10) for the actual ventilation of the container. On top of the holes (10) there is a protection cover (2) covering the holes to prevent direct entry of undesirable elements into the container through the holes. For example dust, moist and water are prevented from directly entering the container. On its turn, the cover (2) will also have holes (12) so that air can flow between the container and the open air through the holes of the container and the cover. The holes (12) of the cover (2) are preferably located at the bottom of the cover. A tracking device (13) is installed within the ventilation device, more specifically within the cover. The tracking device is powered by a battery (14) and this battery is placed inside the container (1). The tracking device may be attached to the cover (2) or to the container itself. The power line (15) runs through the holes (10) of the container and thus connects the battery (14) with the tracking device (13) through said holes.

One or more sensors (16) for monitoring the container may also be connected to the tracking device the same way as the battery is connected, i.e. by running the cable that connects the sensor (16) with the tracking device (13) through one or more of the holes (10) of the container. Such a sensor can have one or more functions, for example measuring temperature, humidity or light. There can also be a contact sensor or door switch sensor that monitors whether the doors of the container are opened or closed. In other words, the container with the tracking device can further comprise at least one sensor installed within the container connected to the tracking device through the holes (10). The tracking device then has controlling means to read the information from this sensor.

Inside the container a switch box (18) may be installed. If sensors are provided, they are then connected to this switch box and the switch box on its turn is connected to the tracking device. All the signal wires from the sensors are then bundled inside the switch box onto a single cable containing all the wires from the sensors. In this case, the switch box provides one to one connections between wires from the tracking device and wires from the sensors (16). This single cable is then connected with the tracking device. Alternatively, the switch box may comprise a sensor multiplexing device to multiplex the signals from the several sensors (16) onto a single wire (17). This single wire then runs from the switch box (18) through one of the holes (10) to the tracking device (13). The switch box may also comprise an antenna again connected by a wire to the tracking device through the holes (10). Wireless sensors may then be installed inside the container and send their information wirelessly to the tracking device over this antenna. Preferably, the battery of the tracking device is installed within the switch box. Furthermore, the switch box may further comprise a second battery or battery pack separately connected to the tracking device. When the first battery is depleted, the tracking device then automatically switches to the second battery. This provides a clear indication to the tracking device that a certain part of the available energy in the batteries is used.

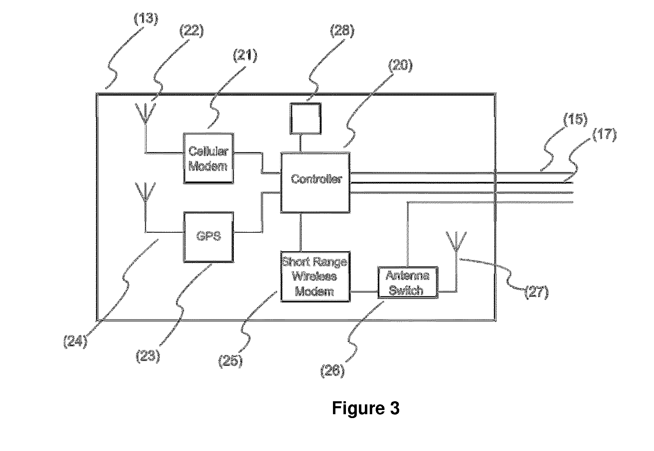

Figure 3 illustrates different possible components comprised within the tracking device.

The tracking device may comprise a controller (20) or controlling means such as for example a microcontroller or a microprocessor with memory and interfacing logic. This controller is used to interface (read and exchange information) with different modules, for example with a positioning or GPS component, with a cellular communication module, with a short range wireless communication module or with various sensors. The tracking device may further comprise a cellular modem (21) and antenna (22), i.e. a cellular communication module or cellular communication means. This module allows the tracking device to communicate wirelessly with a nearby base station using a cellular communication technology. This way, the tracking device can send and receive information from and to every location reachable by the cellular network. Due to the worldwide roaming possibilities offered by telecommunication operators the cellular module is able to function in nearly any cellular network available worldwide. To make the coverage as good as possible, it is preferred that the cellular module actually supports several cellular technologies such as for example OFDMA or CDMA and that it supports multiple standards such as GSM, EDGE, GPRS, UMTS, LTE. These latest technologies allow packet based or circuit based data communication at very low power consumption. In other words, the cellular communication module is a processing and transceiving (i.e. transmission and reception) means (21)(22) arranged for the tracking device to be a terminal in a cellular communication network.

The tracking device may further comprise a Global Positioning System (GPS) module containing a GPS modem (23) and an antenna (24), i.e. a GPS module (23)(24). This module is used by the controller to accurately determine the position of the container. The tracking device is not limited to GPS for obtaining the positioning information. Any positioning technology can be used, such as for example Galileo or GLONASS. Also the cellular module may be used for obtaining positioning information. This information is then obtained by the cellular provider and can be sent to the central system that tracks the container. The advantage of using a dedicating positioning system such as a GPS module is that the controller (20) can log positioning information when the container is not in range of a cellular network. This information can then be sent to the central system when the container is back in range of the cellular network.

The tracking device may further comprise a wireless modem (25) for short range wireless communication. Such short range wireless communication modules have a typical range of up to hundreds of meters and allow low data transfer rates at very low power consumption. This modem may be connected to an antenna (27) inside the tracking device. The wireless modem (25) may also be connected with an antenna inside the container through an antenna switch (26) such that wireless sensors inside the container can send sensor information to the tracking device. When a switch box (18) is used, this antenna may also be installed within this switchbox, In other words, the container can comprise at least one wireless sensor installed within the container. This wireless sensor then also comprises processing and transceiving means for short range wireless communication. The sensor can then connect wirelessly with the tracking device using short range wireless communication for the communication of sensor data from the sensor to the tracking device. The short range wireless modem (25) and antenna (27) may also be used to communicate with nearby containers comprising a tracking device with the same short range wireless modem. The physical layer (PHY) and Medium Access Control (MAC) layer of the short range wireless modem may be, for example, according to the IEEE 802.15.4 standard. The upper layers (application and network layer) may be, for example, according to the Zigbee or 6LoWPAN standard. This module may also be used by the tracking device to communicate with any other container comprising a tracking device according to an embodiment of the instant invention or supporting the same short range wireless communication protocol, if they are positioned not too far apart, i.e. within range of the short range wireless communication module. In other words, the tracking device of the container according to the instant invention may comprise processing and transceiving means for short range wireless communication. The invention is not limited to the above short range wireless standards. Any short range wireless technology may be used such as for example IEEE 802.11, Bluetooth, IEEE 802.15.4, Zigbee.

The controller (20) comprised in the tracking device is also connected (15) with the battery or battery pack inside the container for the supply of power. For this purpose, one or more power lines may be used. The controller may also comprise interface logic to the various sensors (16) or the switch box (18). For the implementation of the multiplexing inside the switch box (18) and the interface logic in the controller (20), the I²C bus protocol may be used for the communication with the different sensors.

Furthermore, the tracking device (13) may also comprise a shock sensor or any other sensor (28) directly connected to the controller inside the tracking device.

When using such a cellular module (23) (24) in the tracking device, the tracking of the container may be done as follows:

When the container is on shore, for example when being stored in a port waiting to be shipped, loaded or unloaded; or when it is travelling on land by train or any other land transportation means; then the cellular module is used to send tracking information, for example location information or information from the sensors to a central service. This central service can then be used to provide tracking information to any third party. This way, the container may be tracked until it is loaded on a ship and the ship is out of range of a cellular network. In that case, the container will be out of range of a cellular network for a long time, until the ship is again in range of a cellular network. When the tracking device cannot send information over a cellular network, the central service can acquire tracking information about the ship itself. Container ships provide this tracking information which can be consulted by any third party, with or without paying a fee for it. That way, the central service can collect tracking information about the ship the container is on and, hence, provide tracking information about the container to any third party. When the container ship is close by a port and in range of a cellular network again, the tracking device in the container can send again information to the central service. When using a cellular module for sending information, it is preferred that the tracking device is not connected with the cellular network all the time. For example, when in range of a cellular network, it can be in a standby mode and only wake up from time to time to initiate a connection with the cellular network to send tracking information to the central service. When out of range of a cellular network, on a container ship off shore for example, the tracking device may be switched off completely for long periods and switched on from time to time to check whether it is in range of a cellular network. Switching on the tracking device can, for example, be done once a day.

It is an advantage of using the cellular communication module that the power consumption of the tracking device can be reduced compared to when using satellite communication means. Hence, the battery will be smaller and the overall price of the tracking device will be lower.

When there is an assembly of containers equipped with a tracking device comprising short range wireless communication means (25), the communication of information to a central service may be done as follows:
- using the short range communication means, all the tracking devices of the containers discover each other and form a short range communication network over which information can be sent. This may for example be accomplished by forming a mobile ad hoc communication network.
- Using the communication network, the tracking devices exchange information on their capabilities to communicate with the central service. This information can for example comprise whether they can connect with the central service, what the quality of that connection is (signal strength) and the battery status of the tracking device.
- One tracking device is elected based on the exchanged information for transmitting the tracking information to the central service. For example, the tracking device with the most remaining battery power can be elected, or the one with the best connection (e.g. based on the Signal to Noise Ratio) with the central service.
- The other tracking devices send their tracking information to the elected tracking device over the short range wireless network.
- The elected tracking device sends all tracking information to the central service by for example the cellular module over the cellular communication network.

It is an advantage of using short range wireless communication between containers in an assembly of containers because it limits the use of the cellular module or any other communication module to the central service further to a single container. Because short range wireless communication consumes less power than a cellular module, the overall power consumption of the tracking devices in the assembly of containers is smaller than in the case where each container would communicate individually with the central service

Such a condition of having an assembly of containers may occur regularly, as someone that wants to ship goods, may rent more than one container. These containers are then shipped together from the source location to their destination and thus remain not too far apart, i.e. within the range of the short range wireless communication means.

## Claims

1. A container (1) comprising:
a tracking device (13) with a battery (14);
ventilation means (4) being provided in a wall (3) of the container (1);
**characterized by** the fact that:
said tracking device (13) is installed within the ventilation means (4); and
said battery (14) of said tracking device (13) is installed within the container (1) and connected to said tracking device (13).

2. The container (1) according to claim 1, wherein the ventilation means (4) comprise holes (10) provided in said wall (3) and a protection cover (2) for preventing entry of undesirable elements into said holes (1); and wherein said battery is connected with said tracking device through said holes.

3. The container (1) according to any one of claims 1 and 2, wherein the tracking device (13) comprises processing and transceiving means (23)(24) arranged for the device to be a terminal in a cellular communication network.

4. The container (1) according to claim 3, wherein said cellular communication network supports at least one cellular communication standard of the group including GSM, UMTS, LTE, CDMA.

5. The container (1) according to any one of the claims 1 to 4, further comprising at least one sensor installed within the container connected to said tracking device through said holes; said tracking device comprising controlling means (20) to read information from said sensors (16).

6. The container (1) according to claim 5, further comprising a switch box (18) installed within said container; said sensors (16) being connected to said switch box; said switch box being connected to said tracking device; said switch box connecting said sensors to said tracking device.

7. The container (1) according to claim 6, wherein said switch box comprises means to multiplex signals from said sensors (16) onto a single signal cable; said cable being connected to said tracking device through said holes.

8. The container (1) according to claim 6 or 7, wherein said battery is installed within said switch box.

9. The container (1) according to any one of claims 6 to 8 wherein said switch box further comprises a second battery separately connected to said tracking device.

10. The container (1) according to any one of claims 1 to 9, wherein the tracking device (13) comprises processing and transceiving means (25) (27) for short range wireless communication.

11. The container (1) according to claim 10, comprising at least one wireless sensor installed within the container; said sensor comprising processing and transceiving means for short range wireless communication; said sensor being wirelessly connected with said tracking device by said short range communication means of said sensor and of said tracking device.

12. The container (1) according to claim 10 or 11, wherein said means for short range communication support at least one communication standard of the group including IEEE 802.15.4, IEEE 802.11, Zigbee, Bluetooth.

13. An assembly of containers according to any one of claims 10 to 12, wherein each container of said assembly is wirelessly connected with at least one other container of said assembly by said means for short range wireless communication.
